# EUROPEAN PATENT APPLICATION

(11) **EP 0 884 376 A2**
(43) Date of publication of application: **16.12.1998**
(21) Application number: 98500131.2
(22) Date of filing: 03.06.1998
(51) Int. Cl.: C10L 3/04

(54) **Use of aerogels as a filler material.**

(30) Priority: 05.06.1997 ES 9701231
(71) Applicant: SOCIEDAD ESPANOLA DE CARBUROS METALICOS S.A., 08038 Barcelona (ES)
(72) Inventor: Molins Grau, Elies, 08980 Sant Feliu de Llobregat, Barcelona (ES); Roig Serra, Anna, 08221 Terrassa (Barcelona) (ES)
(74) Representative: Ponti Sales, Adelaida

(57) **Abstract**

The use of silica aerogels which exhibit an amorphous structure, a density ranging from 0,6 g/cm³ to 0,003 g/cm³ as a filler material for transport and/or storage of fluids, specially acetylene.

Aerogels exhibit the property of transforming a fluid into a solid which encloses it, and subdivides it in small portions. This property is a very important characteristic in the case of highly dangerous fluids. The strict conditions required for transport or storage of fluids are reduced when the transport or storage of said fluids is performed in a silica aerogel.

## Description

### Field of the invention

The present invention refers to the use of aerogels as a filler material.

Aerogels concerned by the present invention find application as a filler material for the transport and/or storage of fluids, particularly for the transport of acetylene.

### Background of the invention

Aerogels are the lightest solid-materials known. Their lightness lies in their high porosity so that they behave as open-cell foams with a large surface area. Pores exhibit a wide size-distribution, although their typical diameter usually is 15-20 nm, 95% of the total volume being occupied by them. The aerogel density ranges from 0,6 g/cm³ to 0,003 g/cm³ (only three times more dense than air). Their structure is derived from the one of the gel which formed it and, therefore, is amorphous.

The most usual process for obtention of silica aerogels comprises the synthesis of silicon gels and their further supercritical drying.

A typical reaction for obtaining silicon gels starting from tetramethoxysilane (TMOS) is the one outlined below: 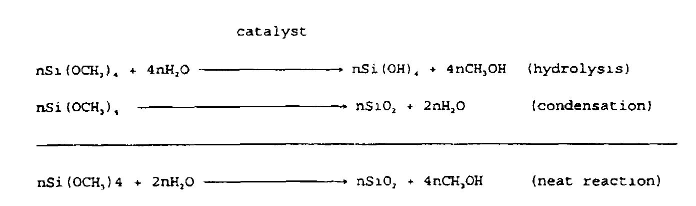 where the starting silicon alkoxyde, the solvent (methanol or acetone) and the catalyst (potassium hydroxide or ammonia with acetic acid) are variables which may be conveniently changed in order to obtain an aerogel tailored according the desired properties. Next, for the obtention of the aerogel the solvent that fills the pores must be extracted under supercritical conditions.

Nevertheless, the current application for aerogels has specially been as a thermal insulator; for instance, the silica aerogel which is a colloidal silica powder is used as low temperature insulator.

Further applications of aerogels are, for example, in satellites where they facilitate meteorite trapping, or as high quality gas-filters, or as auto-focus cameras for televisions.

### Description of the invention

The present invention refers to the use of aerogels as a filler material for transport and/or storage of fluids.

More concretely, the present invention refers to the use of silica aerogels as a filler material for transport and storage of fluids, specially for acetylene.

It is important to point up the current problems concerning transport of some fluids which, due to the fact of being dangerous, for example, because of their flammability or toxicity, they require very special transport or storage conditions.

The present invention concerns the use of aerogels for transport or storage of said fluids, specially for acetylene.

Acetylene is a flammable gas in the presence of air at high temperatures. It is employed in a number of industrial applications such as the synthesis of chemical products, welding, metal cutting, thermal treatment of materials and even for lighting in buoys.

Being a flammable gas, acetylene must be transported in steel cylinders submitted to very severe regulations. This regulations require, among others, that the steel used for the cylinder meets certain physicochemical requirements and that the filling of the cylinder has a maximum of 92% porosity when filled up with a given amount of solvent; moreover, the cylinder must be fitted with the appropriate safety release-devices.

The filling material of the cylinders must be porous in order to prevent the gas decomposition-feature and thus eliminate the possibility of forming acetylene-gas pockets, even small ones. Usually, the porous mass filling the acetylene cylinders is saturated with acetone or another solvent in which acetylene dissolves.

Even in acetone solution, acetylene chemically reacts giving rise to polymeric chains. This reaction is also highly exothermic but, fortunately, it is also slow. In order to prevent this polymerization, cylinders must contain a porous material which practically fills almost the totality of the inner volume; this material is soaked with a suitable solvent, usually acetone, wherein acetylene is dissolved under pressure. To prevent exothermic polymerization of the gas and the further explosion thereof, the filling material of cylinders must be porous with cellular spaces very small sized in order to avoid formation of gas pockets. The occurrence of pockets where acetylene can be accumulated initiates the polymerization reaction, which increases the temperature of their immediate neighbourhood. This increases the reaction rate, whereby the phenomenon extends to other areas in the cylinder. This one gets warm and even turns red-hot. Then, usually the cylinder is immersed in water or brought where it may explode without danger. Once started, this process takes some 24 hours. For this reason, the workers who manipulate these cylinders touch them periodically to check if some of them gets warm.

In the past, cylinders were filled with a fine sand of calcium silicate reinforced with asbestos fibres to avoid it to become compact, otherwise it should remain a large pocket in the cylinder top, which would result in the above mentioned danger. Because the use of asbestos fibres did not solve the problem of pocket-formation and furthermore its use is restricted in view of its carcinogenic effects, a number of back filling materials for the cylinders have been developed during last years.

Due to the conditions that must meet the fillings of acetylene-cylinders, such as porosity, absence of hollow cavities, very little space, if any, between the inner wall of the cylinder and the outer one of the filler, suitable resistance and stability, as well as other considerations in the manufacture and in the safety requirements, the attempts to find new fillers have not been as successful as expected.

Thus, for example, the use of glass fibre results in fissures and, eventually the filler lightly shrinks.

On the other hand, a cotton-fibre filler has resulted in lengthened hollow cavities. Polyester and rayon fibres tend to settle during preparation, making difficult to achieve uniformity in the filling of the cylinder.

The use of supplementary ingredients tends to diminish the resistance and porosity of the filler and adversely affects the discharge of acetylene.

The limitations of the filling materials used up to now in the transport of either acetylene or other similar gases, become apparent when taking into account the properties required for this filling materials, which properties may be summarized as follows:
- high porosity;
- great mechanical resistance;
- they must not suffer degradation or aging with time;
- they must fill up the whole inner volume of the cylinder without letting empty spaces.

It is, therefore, evident that still exists the need of finding new fillers which meet the required conditions, which do not have asbestos fibres, which maintain a high porosity and, at the same time, are inert, stable and lightweight.

The invention provides a solution to the prior art drawbacks by using silica aerogels as a filler material that find application in the transport and/or storage of fluids, specially acetylene. Aerogels exhibit the property of transforming a fluid into a solid which encloses it, and subdivides it in small portions. This property is a very important feature in the case of highly dangerous fluids. The strict conditions required for transport or storage of said fluids are reduced when the transport or storage of such fluids is performed in a silica aerogel.

On the other hand, the safety conditions necessary for the transport of said fluids in conventional filler material must be taken into account because an accident during said transport would imply the loss of almost the totality of fluid.

Advantageously, the use of silica aerogels as a filler material has the advantage that in the case of an accident, the loss of fluid should be minimal due to the fact that the fluid in question is dissolved in the aerogel forming a solid therewith.

Silica aerogels meet the above mentioned features for the filler materials.

Next, reference is made to the physical characteristics for the silica gels and aerogels used as filler materials of the present invention.

### Description of the drawings

Figure 1 shows the diffractogram of an air-dried gel.

Figures 2, 3 and 4 are the diffractograms of different aerogels.

Figures 5, 6, 7 and 8 show the pore-size distribution for different aerogels.

### Aerogel characterization

### Visual inspection

Aerogels are monolithic and non-monolithic and have few cracks or defects.

### Structural characterization: X-rays

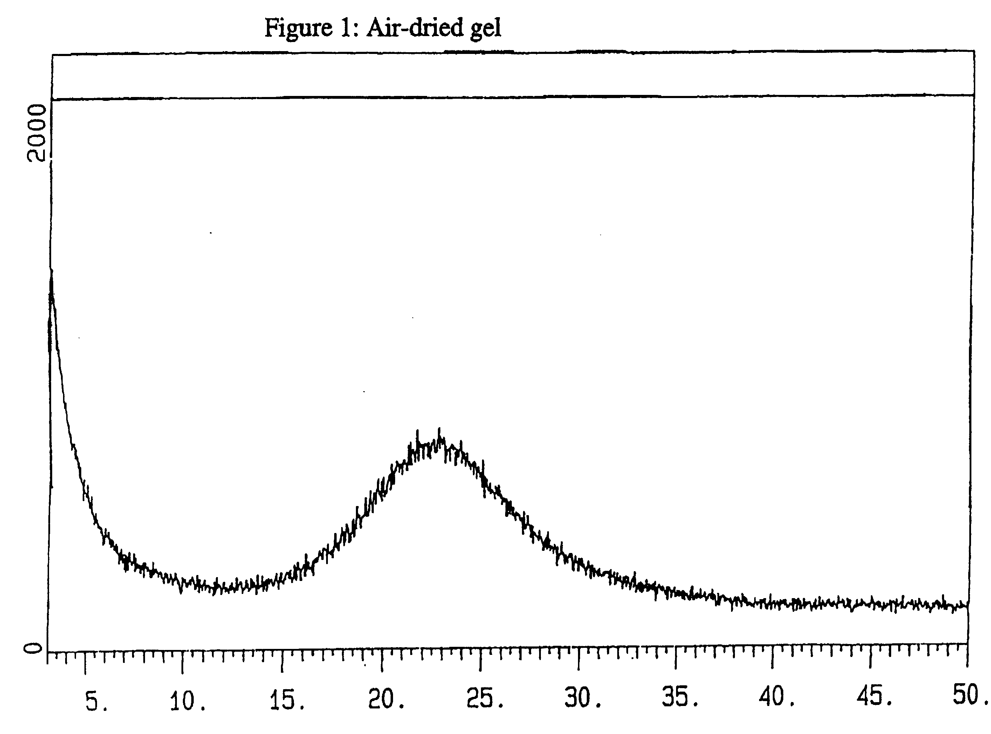

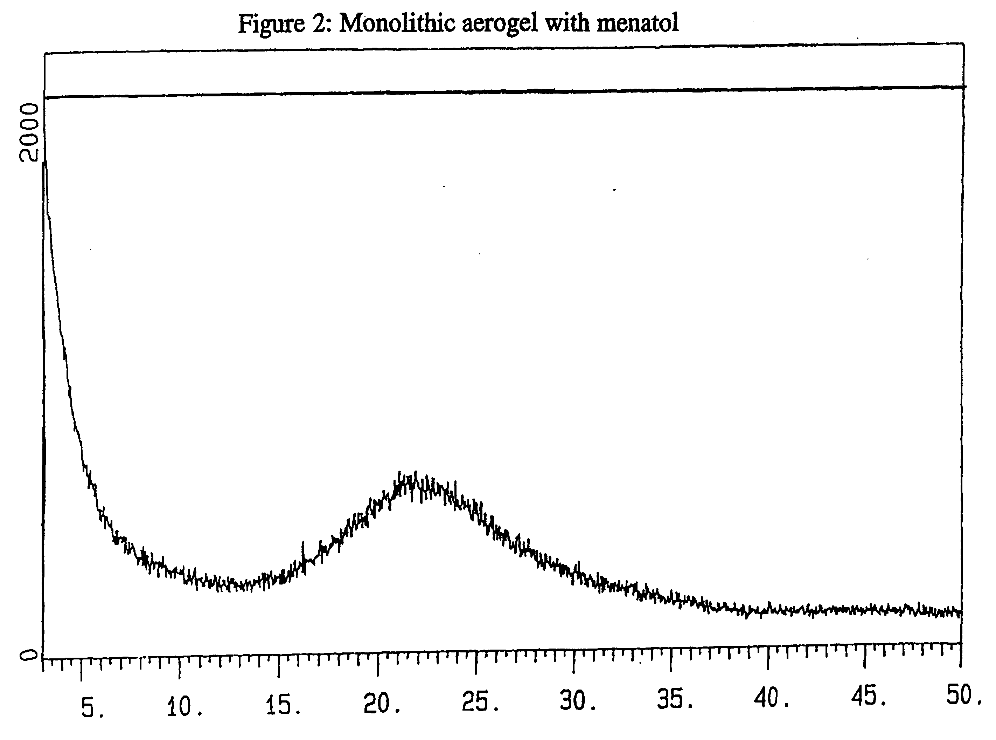

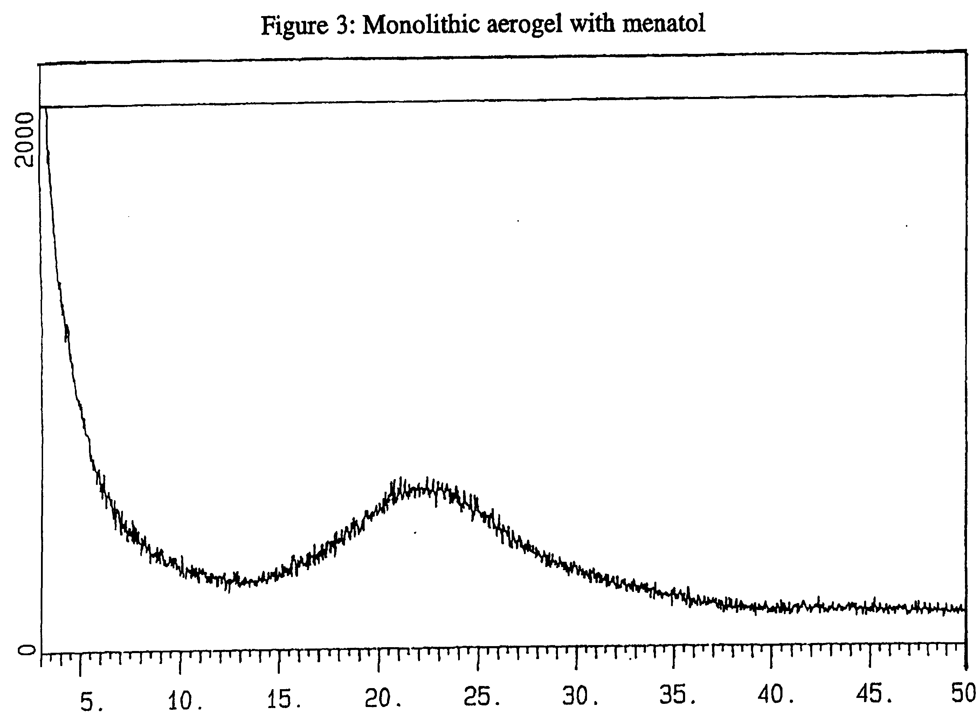

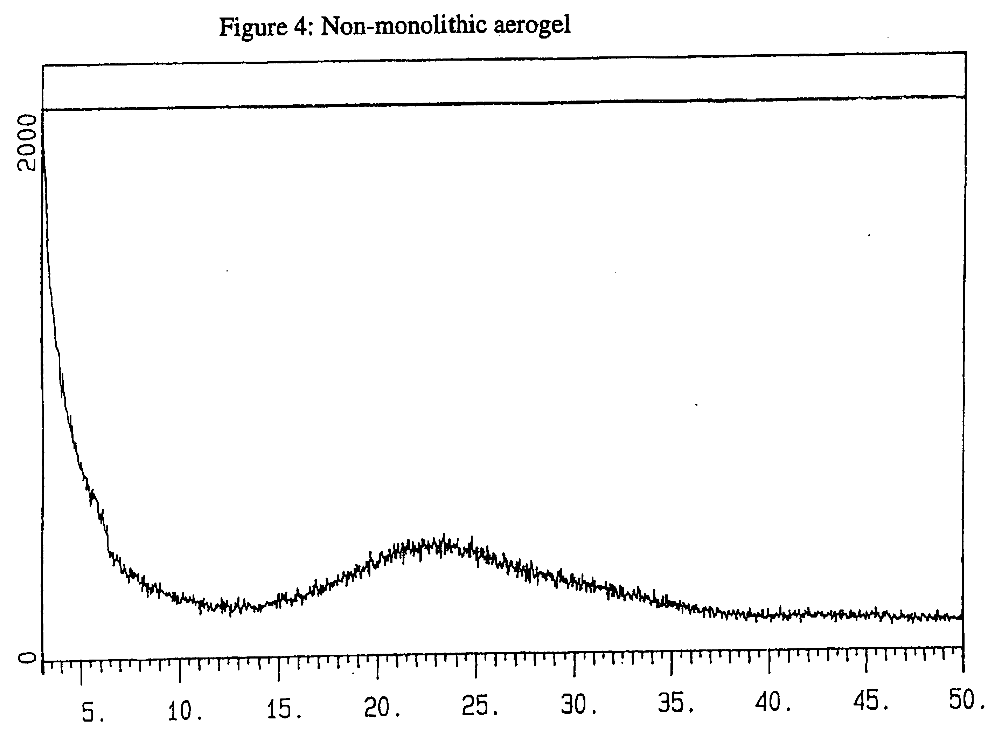

The X-ray results confirm a completely amorphous structure of the material with a very large single pick at about 2θ = 23° (see Figures 1-4). There is no difference between the X-ray results for the air-dried gel (Fig. 1) and the supercritically dried monolithic aerogels (Fig. 2 and 3), nor between the monolithic aerogels and those of powdery type.

### Porous-structure characterization

According to the IUPAC nomenclature, pores have a size with D = pore diameter of: micropores D < 2 nm, mesopores 2 nm < D < 50 nm, and macropores D > 50 nm. Silica aerogels contain pores of the three types, the majority of them having the size of mesopores and the minority that of the micropores.

### Density

Density was determined by weighing the monolithic pieces of the different aerogels with a precision balance, and calculating their volume.

In the following Table all the samples tested are collected. The densities and porosities (P=(1-ρ_{Aerogel}/ρ_{SiO2}) weight porosity for a silica density of 2,19 g/cm³) are referred to the resulting aerogel. In the acetone gels, V makes reference to the ratio between volumes of TMOS and of TMOS solution and acetone.

**Table 1**

| Reagents for the aerogel obtention | Density (g/cm³) | Weight porosity |
|---|---|---|
| Methanol and NH₄OH | 0.106 | 92.2 % |
| Methanol and NH₄OH | 0.137 | 93.7 % |
| Methanol and NH₄OH | 0.143 | 93.5 % |
| Methanol and NH₄OH | 0.148 | 93.3 % |
| Methanol and NH₄OH | 0.178 | 92.0 % |
| Methanol and NH₄OH | 0.253 | 88.4 % |
| Methanol and NH₄OH with CH₃COOH | 0.105 | 95.2 % |
| Acetone (V=0,2) | 0.167 | 92.3 % |
| Acetone (V=0,2) | 0.151 | 93.1 % |
| Acetone (V=0,2) | 0.151 | 93.1 % |
| Acetone (V=0,2) | 0.137 | 93.7 % |
| Acetone (V=0,2) | 0.283 | 87.1 % |
| Acetone (V=0,3) | 0.245 | 88.9 % |
| Acetone (V=0,3) | 0.247 | 88.8 % |
| Acetone (V=0,3) | 0.435 | 80.2 % |
| Acetone (V=0,4) | 0.321 | 73.7 % |

### BET

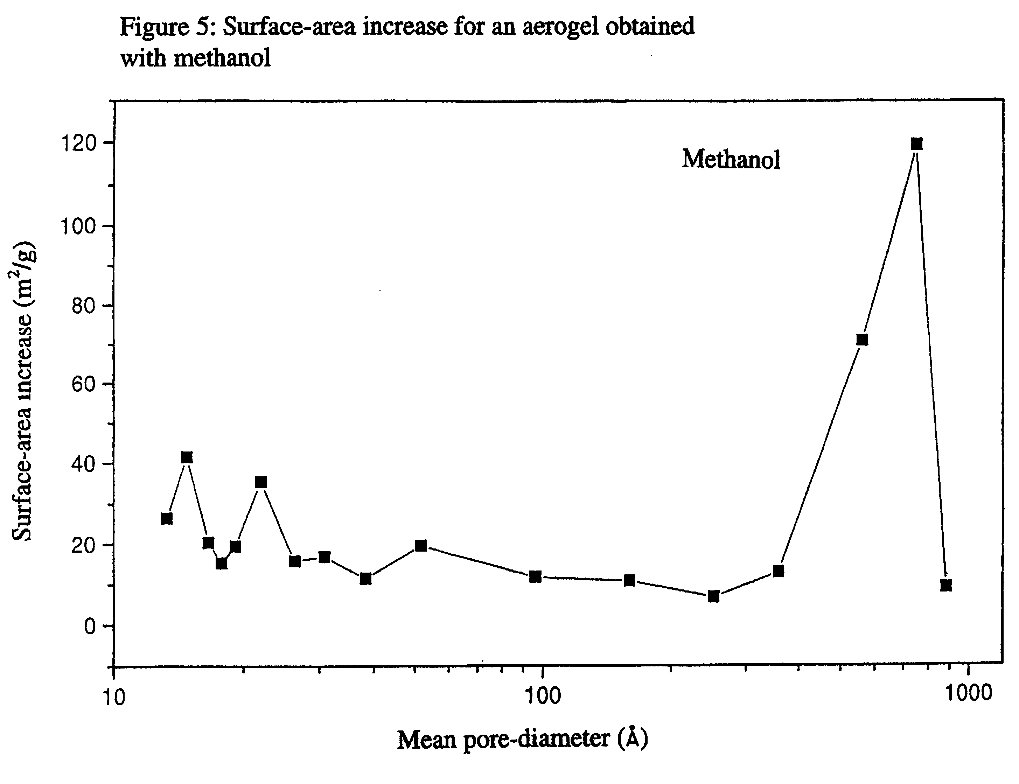

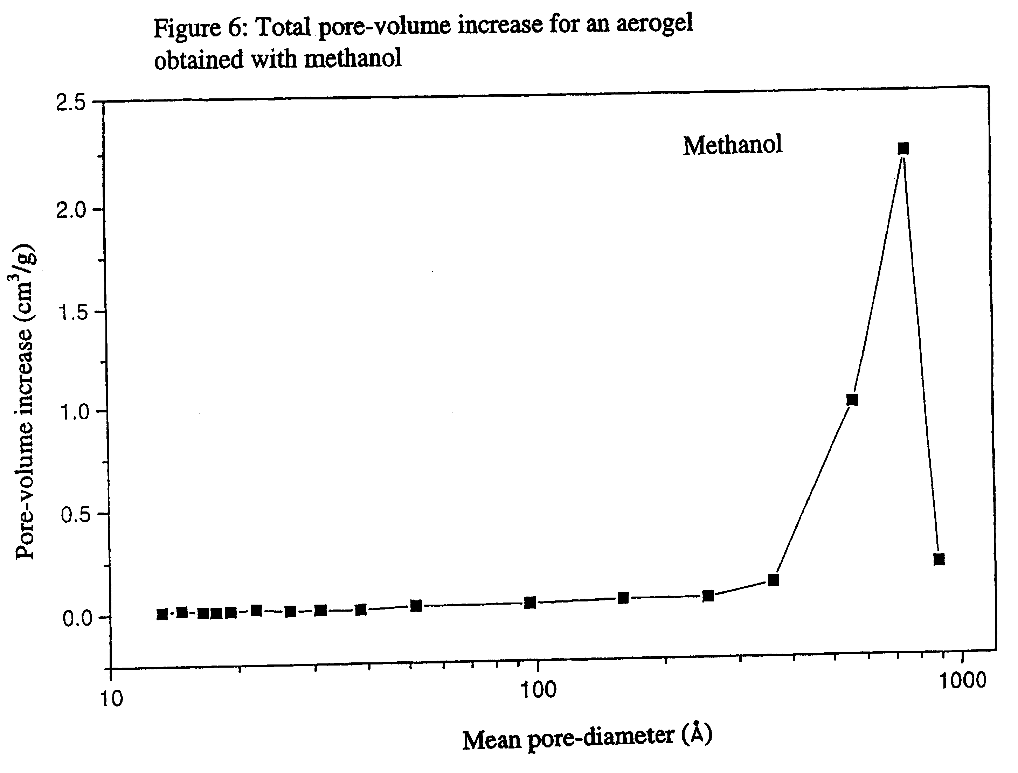

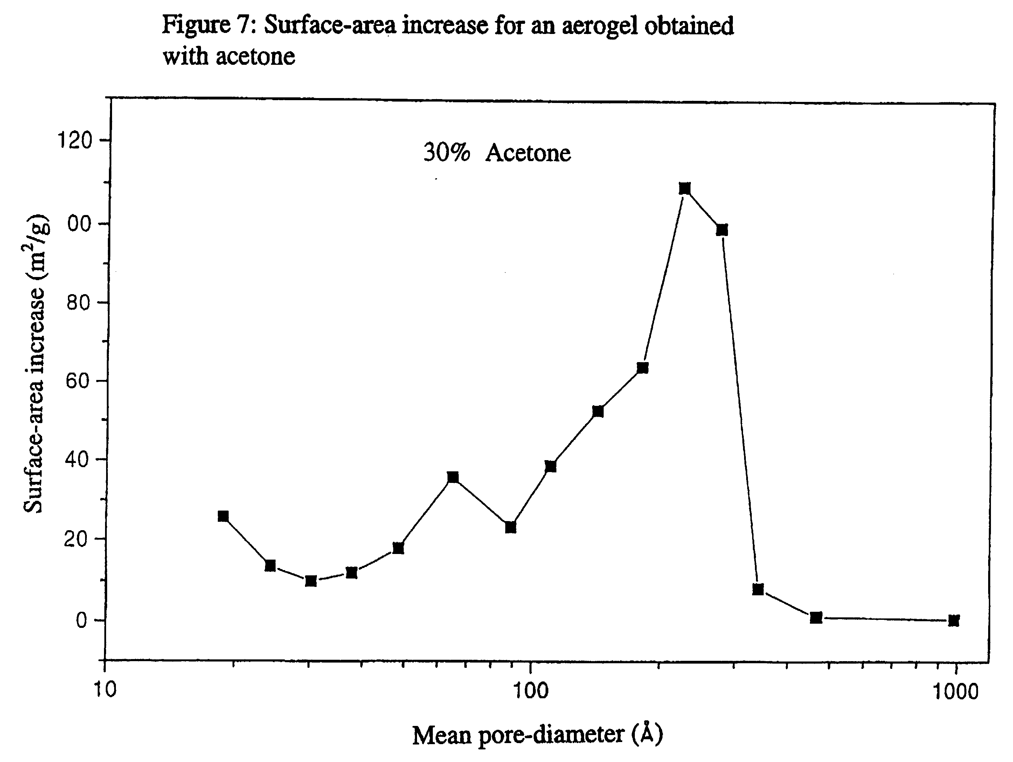

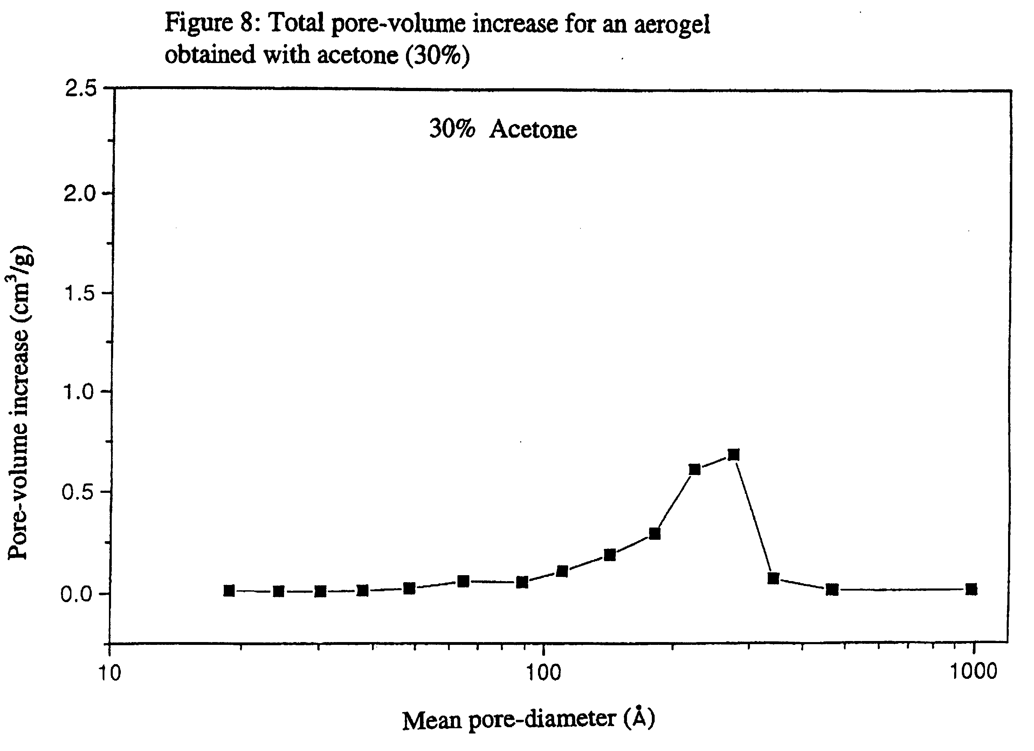

The BET method (gas absorption) is useful to measure the surface area of a material, the total volume taken up by pores and their size distribution. The BET results for some aerogels are shown in Table 2 (see Figures 5, 6, 7 and 8).

**Table 2**

| Properties of the porous structure of some aerogels. | | | | | |
|---|---|---|---|---|---|
| | Density (g/cm³) | Porosity (weight percent) | Surface area | Total volume of pores (cm³/g) | Mean pore-diameter (Å) |
| Methanol | 0.14 | 94 | 470 | 5.72 | 486 |
| Acetone (20%) | 0.28 | 87 | 630 | 2.64 | 356 |
| Acetone (30%) | 0.43 | 80 | 414 | 2.13 | 205 |

Considerations about the results obtained from these measurements:

The surface areas of all the aerogels are rather similar, between about 400 and about 600 m²/g. The total volume of pores is twofold larger for gels obtained with methanol as compared with those obtained with acetone. The mean pore-diameter is smaller for aerogels obtained with acetone as compared with those obtained with methanol.

## Claims

1. Use of silica aerogels presenting an amorphous structure, a density ranging from 0,6 g/cm³ to 0,003 g/cm³, as a filler material for transport and/or storage of fluids.

2. Use as claimed in Claim 1 characterized in that the fluid is acetylene.

3. Use as claimed in Claim 1 characterized in that micropores have a diameter size smaller than about 2 nm.

4. Use as claimed in Claim 1 characterized in that mesopores have a diameter size ranging from about 2 nm to about 50 nm.

5. Use as claimed in Claim 1 characterized in that macropores have a diameter size greater than about 50 nm.

6. Use as claimed in Claim 1 characterized in that the surface area is higher than about 400 m²/g.
